# EUROPÄISCHE PATENTSCHRIFT

(11) **EP 3 864 263 B1**
(45) Veröffentlichungstag und Bekanntmachung des Hinweises auf die Patenterteilung: **30.08.2023**
(21) Anmeldenummer: 19805897.6
(22) Anmeldetag: 11.10.2019
(51) Int. Cl.: F01N 3/20, F01N 3/28, F01N 3/027, H05B 3/06, H05B 3/34, H05B 3/42

(54) **VORRICHTUNG ZUR ABGASBEHANDLUNG**
APPARATUS FOR EXHAUST GAS TREATMENT
DISPOSITIF POUR TRAITEMENT DES GAZ D'ÉCHAPPEMENT

(30) Priorität: 11.10.2018 DE 102018217438
(43) Veröffentlichungstag der Anmeldung: 18.08.2021
(73) Patentinhaber: Vitesco Technologies GmbH, 93055 Regensburg (DE)
(72) Erfinder: HIRTH, Peter, 81737 München (DE); RINGS, Florian, 81737 München (DE)
(74) Vertreter: Vitesco Technologies
(86) Internationale Anmeldenummer: PCT/EP2019/077574
(87) Internationale Veröffentlichungsnummer: WO 2020/074695

(56) Entgegenhaltungen:
- EP-A1- 0 677 649
- WO-A1-92/02714
- DE-A1- 4 243 904
- DE-A1-102015 111 913

## Beschreibung

Die vorliegende Erfindung betrifft eine Vorrichtung zur elektrischen Kontaktierung eines elektrisch beheizbaren Katalysators in einer Abgasanlage für Kraftfahrzeuge mit Verbrennungsmotoren zur Abgasbehandlung, die dafür eingerichtet ist, mehrere Leiterbahnen, die innerhalb eines von einer Außenwand der Vorrichtung umgebenen Innenraums angeordnet sind, durch die Außenwand hindurch elektrisch zu kontaktieren.

Derartige Vorrichtungen sind grundsätzlich bekannt, beispielsweise aus der EP 2 175 115 A1. Die dort offenbarte Vorrichtung zur Abgasbehandlung weist eine Sensorfolie auf, die mit einem Leiterelement ausgeführt ist. Ein Gehäuse der Vorrichtung weist eine Öffnung zur Kontaktierung des Leiterelements auf. In Ausführungsformen ist vorgesehen, die Öffnung zur Kontaktierung mehrerer Leiterelemente zu nutzen. Die Vorrichtung weist auf einer Außenfläche des Gehäuses eine metallische Hülse auf, die um die Öffnung herum angeordnet ist, beispielsweise mit einer gasdichten Schweißnaht. Die Hülse kann innen mit einer Isolierung ausgekleidet sein und eine Elektrode zur Kontaktierung des Leiterelements sicher aufnehmen. So soll insbesondere auch gewährleistet sein, dass kein Abgas durch die Hülse hindurch nach außen gelangt.

Aus dem Stand der Technik sind ebenfalls elektrisch beheizbare Katalysatoren bekannt, die metallische Blechlagen aufweisen, die elektrisch isoliert an einem Stützsubstrat angebracht sind.

Außerdem sind elektrisch beheizbare Trägersubstrate bekannt, die mittels isoliertem Heizleiter an den Stirnseiten eines in dem Innenraum angeordneten Wabenkörpers der Vorrichtung ausgeführt sind.

Eine weitere bekannte Möglichkeit, ein Substrat zu beheizen, besteht darin, einen möglichst großen Teil einer inneren Katalysatorfläche mittels Leiterbahnen zu versehen, welche auf eine Glatt-/Welllage der Vorrichtung aufgebracht werden. Mittels der Leiterbahnen kann elektrisch annähernd das komplette Trägervolumen beheizt werden.

Die DE 42 43 904 A1 offenbart einen Katalysator für die Reinigung von Abgas aus Verbrennungsprozessen, vorzugsweise von Verbrennungsmotoren mit einem Gehäuse und einem darin angeordneten Träger, vorzugsweise mit einer Vielzahl von zueinander parallel verlaufenden, wabenartig ausgebildeten Kanälen, die eine katalytisch gegenüber dem Abgas wirksame Schicht aufweisen, wobei zumindest ein Teilbereich der Oberfläche des Trägers zumindest eine elektrisch leitende Widerstandsheizschicht und gegebenenfalls eine damit verbundene elektrisch leitende Anschlussschicht aufweist, die auf dem Träger aus einem metallischen Werkstoff in Form einer Anzahl von voneinander vorzugsweise mittels eines gewellten Blechs unter Bildung der Kanäle beabstandet angeordneten Metallfolien aufgebracht ist. Wobei im elektrischen Anschlussbereich zumindest einer der Metallfolien zwischen der katalytisch wirksamen Schicht und entweder der elektrisch leitenden Anschlussschicht oder der elektrisch leitenden Widerstandsheizschicht zumindest eine elektrisch nichtleitende weitere Schicht vorgesehen ist.

Die WO 92/02714 A1 offenbart einen elektrisch beheizbaren Wabenkörper, insbesondere einen Katalysator-Trägerkörper, mit inneren Tragstrukturen. Der Wabenkörper ist elektrisch leitfähig und daher unter Ausnutzung des ohmschen Widerstandes beheizbar

Die DE 10 2015 111913 A1 offenbart eine elektrisch beheizte Katalysatorvorrichtung, welche die nachfolgenden Elemente umfasst: einen Träger, der ausgestaltet ist, um einen Katalysator zu tragen; ein Paar Stromdiffusionsschichten, die auf einer äußeren Randfläche des Trägers ausgebildet sind und einander gegenüberliegen; sowie Leitungselemente, die an jeder der Stromdiffusionsschichten angebracht sind, wobei der Träger über die Leitungselemente elektrisch beheizt wird. Jede der Stromdiffusionsschichten ist derart ausgebildet, dass sie in eine axiale Richtung des Trägers in eine Mehrzahl von Bereichen unterteilt ist.

Die EP 0 677 649 A1 offenbart ein verbessertes Kernelement zur Verwendung in Konvertern, insbesondere in katalytischen Konvertern. Der Kern ist durch zwei Abschnitte gekennzeichnet, von denen einer elektrisch beheizt werden kann und der andere elektrisch und thermisch von dem ersten Abschnitt isoliert ist.

Bei herkömmlichen beheizbaren Katalysatoren können einige Probleme beobachtet werden. Beispielsweise kann manchmal nicht die gesamte Katalysatorfläche beheizt werden. Für 48-Volt-Anwendungen werden manchmal höhere als übliche Widerstände benötigt und diese sind bei kleinen Substratgrößen technisch manchmal nicht umsetzbar, da eine Mindestmateriallänge des Substrats vorhanden sein muss.

Weiterhin kann es Probleme beim Einbringen eines isolierten Heizleiters geben. Da der Heizleiter isoliert ist, kann eine Temperaturverteilung verhältnismäßig schlecht sein. Im Bereich des Heizleiters können zudem verschlossene Zellen auftreten oder es kann auch ein erhöhter Gegendruck auftreten.

Schließlich kann es auch beim Aufheizen relativ großer Katalysatorflächen zu Problemen kommen. Die elektrische Kontaktierung durch Herausführen jeder einzelnen Leiterbahn von Heizelementen durch die Außenwand der Vorrichtung kann sehr aufwändig sein. Weiter ist eine thermo-mechanisch stabile Trägerfolienbeschichtung oft mit einem großen Prozessaufwand verbunden. Die Dichtigkeit der Vorrichtung, beispielsweise hinsichtlich austretender Abgase, kann durch das Herausführen der vielen einzelnen elektrischen Kontakte ebenfalls beeinträchtigt sein.

Eine Aufgabe der Erfindung besteht darin, eine Vorrichtung zur Abgasbehandlung bereitzustellen, die gegenüber dem Stand der Technik verbessert ist. Insbesondere soll die Stromversorgung der Leiterbahnen durch die Außenwand hindurch vereinfacht sein.

Die Aufgabe der Erfindung wird gelöst durch die Vorrichtung zur elektrischen Kontaktierung eines elektrisch beheizbaren Katalysators in einer Abgasanlage für Kraftfahrzeuge mit Verbrennungsmotoren zur Abgasbehandlung der eingangs genannten Art, bei der in dem Innenraum eine oder mehrere durch die Außenwand hindurch elektrisch kontaktierbare Elektroden angeordnet sind, von denen jede zwei oder mehr der Leiterbahnen in dem Innenraum elektrisch kontaktiert, wobei in dem Innenraum einen oder mehrere der Leiterbahnträger aufweist, die jeweils eine der Leiterbahnen tragen, wobei jeweils eine der Leiterbahnen auf einer Oberfläche eines jeweiligen Leiterbahnträgers angeordnet und auf der Oberfläche und der Leiterbahn ist vorzugsweise eine elektrisch isolierende Isolierbeschichtung gebildet, die an einer Kontaktfläche der Leiterbahn zum elektrischen Kontaktieren der Leiterbahn unterbrochen ist, um die Leiterbahn durch die Außenwand hindurch elektrisch zu kontaktieren.

Diese Lösung hat den Vorteil, dass mit derselben Elektrode mehrere Leiterbahnen in dem Innenraum elektrisch kontaktierbar sind. Es ist also nicht notwendig, für jede Leiterbahn eine separate Elektrode zur elektrischen Kontaktierung vorzusehen. So wird die Stromversorgung vereinfacht. Weiterhin können Kosten gesenkt werden, weil die Anzahl der Elektroden verringert sein kann. Auch kann der Platzbedarf im Innenraum durch die reduzierte Anzahl an Elektroden verringert sein, sodass die Vorrichtung kompakter gebaut werden kann. Ebenso kann der Aufbau der Vorrichtung vereinfacht sein, wenn mehrere Leiterbahnen an derselben Elektrode und somit quasi am selben Ort in der Vorrichtung elektrisch kontaktiert werden können.

Bevorzugte Ausführungsformen der Erfindung sind Teil der abhängigen Patentansprüche.

Vorzugsweise weist die Außenwand eine Öffnung auf, um die mehreren Leiterbahnen, die innerhalb des Innenraums angeordnet sind, durch die Außenwand elektrisch zu kontaktieren. Bevorzugt ist, dass die Öffnung in einem von dem Innenraum nach außen abstehenden Vorsprung angeordnet ist, der vorzugsweise einstückig mit der Außenwand gebildet ist. Dies hat den Vorteil, dass auf eine aus dem Stand der Technik bekannte Schweißnaht zwischen der Außenwand und der davon separaten metallischen Hülse verzichtet werden kann. Die Schweißnaht kann beispielsweise eine potentielle Leckstelle für Abgase nach außen darstellen. Durch den einstückig gebildeten Vorsprung, der die Hülse ersetzt, wird die separate Hülse und damit die Schweißnaht zwischen der Hülse und der Außenwand überflüssig. Auf diese Weise lassen sich zudem Bauteile, Herstellungsschritte und damit auch Herstellungskosten einsparen.

Bevorzugt ist, dass der Vorsprung als eine Sicke in der Außenwand gebildet ist. Eine Sicke kann auf einfache Weise in die Außenwand eingearbeitet werden, insbesondere, wenn die Außenwand kreiszylindrisch geformt ist. Vorzugsweise kann die Sicke eine Breite und eine Tiefe aufweisen, die eine bequeme Kontaktierung des oder der Leiter bzw. Halbleiter durch die Öffnung hindurch zulässt. Die Öffnung ist vorzugsweise an einer Oberseite der Sicke angeordnet, die Öffnung kann aber in anderen Ausführungsformen alternativ in einer Seitenwand der Sicke angeordnet sein. Die Öffnung kann als Bohrung ausgeführt sein. Vorzugsweise dient die Öffnung dazu, einen Plus-Pol einer oder mehrerer der Leiterbahnen zu kontaktieren. In manchen Ausführungsformen dient die Öffnung jedoch dazu, sowohl den Plus-Pol als auch den Minus-Pol einer oder mehrerer der Leiterbahnen zu kontaktieren. Vorzugsweise hat die Sicke eine Deckwand, die die Seitenwände verbindet und parallel zu Abschnitten der Außenwand verläuft, die an die beiden Seitenwände anschließen. Bevorzugt ist, dass die Seitenwände im Wesentlichen senkrecht zur Deckwand verlaufen. Besonders bevorzugt ist, dass die Öffnung in der Deckwand gebildet ist.

Vorzugsweise bildet der Vorsprung, vorzugsweise die Sicke, einen Hohlraum zwischen der Außenwand und einem Leiterbahnträger innerhalb des Innenraums aus. Vorzugsweise weist die Sicke zwei parallele Seitenwände auf. Der Leiterbahnträger ist vorzugsweise eine Folie. Der Hohlraum ist in dem Innenraum gebildet und wird vorzugsweise durch die Seitenwände und die Deckwand der Sicke und durch den Leiterbahnträger begrenzt. Solch ein Hohlraum kann vorteilhaft sein, um Bauraum zur bequemen elektrischen Kontaktierung der Leiterbahnen zu schaffen.

In dem Hohlraum ist vorzugsweise zwischen der Öffnung und dem Leiterbahnträger eine Elektrode angeordnet, um die eine oder die mehreren Leiterbahnen zu kontaktieren. So kann der durch den Hohlraum geschaffene Bauraum genutzt werden. Bevorzugt ist, dass in dem Hohlraum die eine oder die mehreren durch die Außenwand hindurch elektrisch kontaktierbaren Elektroden angeordnet sind, von denen jede zwei oder mehr der Leiterbahnen in dem Innenraum elektrisch kontaktiert.

Sind mehrere Elektroden vorgesehen, so ist bevorzugt, dass zwei oder mehr der Elektroden durch eine selbe Öffnung in der Außenwand hindurch elektrisch kontaktierbar sind, wobei die Öffnung radial in der Außenwand über einem Bereich des Innenraums angeordnet ist, in dem die Leiterbahnen kontaktierbar sind. So kann die Anzahl der Öffnungen reduziert sein, was sich positiv auf die Dichtigkeit der Vorrichtung und auf die Herstellungskosten auswirken kann. Für die elektrische Kontaktierung der mehreren Elektroden ist in anderen Ausführungsformen jedoch für jede Elektrode eine separate Öffnung vorgesehen, sodass dann jede Elektrode durch eine ihr zugeordnete Öffnung durch die Außenwand hindurch elektrisch kontaktierbar ist.

Die Elektrode ist vorzugsweise so ausgelegt, dass in Verbindung mit dem Enden der einen oder der mehreren Leiterbahnen ein Querschnitt der Elektrode, also eine Materialdicke, angepasst ist. Dies ist vorteilhaft, um eine konstante Stromdichte innerhalb der Elektrode sicherzustellen. Andernfalls kann es dazu kommen, dass durch eine abnehmende/ zunehmende Stromdichte unerwünschte kalte/warme Stellen entstehen. Die erforderliche Änderung der Materialdicke ist abhängig von einer Stromaufnahme der jeweiligen Leiterbahn. Vorzugsweise variiert also der Querschnitt der Elektrode abschnittsweise in Abhängigkeit von der Stromaufnahme der dort jeweils kontaktierten Leiterbahn. Die Elektrode weist vorzugsweise in radialer Richtung der Außenwand eine Dicke auf, die an den erwarteten Stromfluss angepasst ist. Vorzugsweise ist die Elektrode an ihrer dicksten Stelle um mehr als einen Faktor 2 dicker als an der dünnsten Stelle, nochmal bevorzugt um mehr als einen Faktor 3, nochmal bevorzugt um, mehr als einen Faktor 4, besonders bevorzugt um mehr als einen Faktor 5. So kann an der dicksten Stelle ein wesentlich größerer Stromfluss als an der dünnsten Stelle bewältigt werden, ohne dass ein wesentlicher Temperaturunterschied auftritt.

Bevorzugt ist, dass sich die Isolierbeschichtung auch zwischen Oberfläche des Leiterbahnträgers und der Leiterbahn erstreckt, um den Leiterbahnträger gegen die Leiterbahn elektrisch zu isolieren.

Vorzugsweise ist die Elektrode als Stromschiene ausgebildet, die sich vorzugsweise entlang mindestens eines Abschnitts der Außenwand erstreckt, um mehrere der Leiterbahnen zu kontaktieren. So kann mit einer einzigen Elektrode eine Vielzahl von Leiterbahnen kontaktiert werden, sodass nicht für jede Leiterbahn eine separate Elektrode benötigt wird. In bevorzugten Ausführungsformen ist die Elektrode als streifenartige Stromschiene ausgebildet. Vorzugsweise erstreckt sich die Stromschiene entlang mindestens eines Abschnitts des Vorsprungs, vorzugsweise der Sicke. Ist die Elektrode als Stromschiene ausgebildet, können auf besonders einfache Weise mehrere Leiterbahnen einfach über die Elektrode elektrisch kontaktiert werden, weil sie entlang ihrer Erstreckungsrichtung ausreichend Platz dafür bietet. Die Elektrode kann also insbesondere dann als Stromschiene ausgeführt sein, wenn mehrere Leiterbahnen für die Kontaktierung durch die Elektrode vorgesehen sind. Die Stromschiene ist vorzugsweise mit einem selben Biegeradius gekrümmt wie die Außenwand, sodass der Streifen dafür eingerichtet ist, der Außenwand im Innenraum im Wesentlichen mit gleichbleibendem Abstand in einer Umfangsrichtung zu folgen. Vorzugsweise ist eine Durchtrittsfläche der Öffnung größer als eine Flächenausdehnung der Elektrode hinsichtlich einer Fläche, die dem Innenraum zugewandt ist. Insbesondere kann die Ausdehnung der Öffnung in Umfangsrichtung der Außenwand größer als eine Länge der Elektrode in ihrer Erstreckungsrichtung sein, vorzugsweise wenn die Elektrode als Stromschiene ausgeführt ist. So kann die Elektrode einfach durch die Öffnung hindurch in den Innenraum eingesetzt werden.

In alternativen Ausführungsformen ist die Elektrode als Kabelanordnung ausgeführt, die einen eingangsseitigen Leiter zur elektrischen Kontaktierung durch die Außenwand hindurch und eine Vielzahl von ausgangsseitigen Leitern zur elektrischen Kontaktierung von mehreren der Leiterbahnen in dem Innenraum aufweist. Die Kabelanordnung verzweigt also den eingangsseitigen Leiter auf die mehreren ausgangsseitigen Leiter. Vorzugsweise sind genauso viele ausgangsseitige Leiter vorhanden wie in dem Innenraum elektrisch zu kontaktierende Leiterbahnen.

Vorzugsweise ist die Länge der Elektrode größer oder gleich die Hälfte eines radialen Umfangs der Außenwand, insbesondere, wenn die Außenwand kreiszylindrisch geformt ist. Vorzugsweise ist die minimale Länge der Elektrode Lₘᵢₙ = 0,5 * π * D, wobei D für den Durchmesser der kreiszylindrischen Außenwand steht. Die Elektrode ist vorzugsweise aus einem elektrisch leitfähigen Material gebildet, das einen spezifischen Widerstand ρ hat, der zwischen 0 und 3 (Ohm*mm²)/m liegt. Vorzugsweise ist ρ ≤ 1,5 (Ohm*mm²)/m. So kann eine besonders gute elektrische Leitfähigkeit der Elektrode erreicht werden.

Bevorzugt ist, dass die Elektrode über eine oder mehrere elektrisch isolierende Stützen an der Außenwand befestigt ist.

In manchen Ausführungsformen sind die elektrisch isolierenden Stützen als Stützstifte ausgeführt. In manchen Ausführungsformen sind die elektrisch isolierenden Stützen als elektrisch isolierte Lötverbindung zur Außenwand, insbesondere zwischen Elektrode und Außenwand, ausgeführt. Vorzugsweise ist die Stütze als Stützstift ausgeführt. Es können mehrere Stützstifte vorgesehen sein, die in gleichem Abstand voneinander entlang einer Erstreckungsrichtung der Elektrode angeordnet sind, insbesondere zwei bis acht Stützstifte, vorzugsweise fünf. Der Stützstift weist vorzugsweise zwei voneinander elektrisch isolierte Teilstifte auf. Bevorzugt ist, dass ein erster Teilstift in dem zweiten Teilstift koaxial fest aufgenommen ist und zwischen den beiden Teilstiften ein Isolationsmaterial zur elektrischen Isolierung eingebracht ist. Der erste Teilstift kann dann an der Außenwand befestigt sein und der zweite Teilstift an der Elektrode oder umgekehrt. So wird eine stabile mechanische Verbindung zwischen Elektrode und Außenwand erreicht und eine unerwünschte elektrische Kontaktierung zwischen Elektrode und Außenwand wird verhindert. In alternativen Ausführungsformen sind eine oder mehrere der elektrisch isolierenden Stützen jeweils nicht als Stützstift, sondern als elektrisch isolierte Lötverbindung zur Außenwand, insbesondere zwischen Elektrode und Außenwand, ausgeführt. Einige Ausführungsformen sehen vor, dass eine oder mehrere der elektrisch isolierenden Stützen als Stützstift ausgeführt sind und zugleich eine oder mehrere weitere elektrisch isolierende Stützen als elektrisch isolierte Lötverbindung zur Außenwand, insbesondere zwischen Elektrode und Außenwand, ausgeführt sind.

In einigen Ausführungsformen sind auf der Elektrode nebeneinander mehrere elektrisch leitfähige Kontaktbereiche bereitgestellt. Bevorzugt ist, dass jeweils einer der Kontaktbereiche jeweils einer von mehreren Leiterbahnen zur elektrischen Kontaktierung zugeordnet ist. Besonders vorzugsweise ist den mehreren Kontaktbereichen auf der Elektrode jeweils ein Isolierbereich zwischengeordnet. Dies ermöglicht, eine elektrische Kontaktierung nur auf die Kontaktbereiche zu beschränken und Kontaktflächen der Leiterbahnen im Innenraum flächig anliegend oder anstoßend an die Kontaktbereiche der Elektrode zu platzieren. Andere Elemente im Innenraum können dann an den Isolierbereichen der Elektrode flächig anliegen oder anstoßen, ohne elektrisch von außerhalb der Vorrichtung durch die Elektrode kontaktiert zu werden. Dies erlaubt einen kompakten Aufbau der Vorrichtung. Vorzugsweise ist die Elektrode als Stromschiene ausgeführt und rechteckige Kontaktbereiche wechseln sich entlang der Erstreckungsrichtung der Stromschiene mit rechteckigen Isolierbereichen ab. Es ist zweckmäßig, genauso viele Kontaktbereiche wie zu kontaktierende Leiterbahnen vorzusehen.

Im Innenraum sind in Ausführungsformen in bekannter Weise gewickelte Glattlagen angeordnet, die sich mit gewickelten Welllagen abwechseln. Vorzugsweise ist mindestens eine der Glattlagen der Leiterbahnträger. Besonders bevorzugt ist, dass mindestens zwei der Glattlagen die Leiterbahnträger sind und jeweils eine zu kontaktierende Leiterbahn tragen. Um die gewünschte elektrische Kontaktierung der Leiterbahnen zu erreichen und unerwünschte elektrische Kontaktierungen, insbesondere der Welllagen, zu vermeiden, können die Glattlagen und die Welllagen so angeordnet sein, dass nur die nicht isolierten Kontaktflächen der Glattlagen mit den elektrisch leitfähigen Kontaktbereichen der Elektrode in Kontakt stehen. Alle nicht elektrisch zu kontaktierenden Elemente im Innenraum stehen dann allenfalls mit den Isolierbereichen der Elektrode in Kontakt, sodass eine unerwünschte elektrische Kontaktierung vermieden wird.

Bevorzugt ist, dass genau eine elektrische Durchführung die Öffnung durchtritt und elektrisch mit der Elektrode verbunden ist. Die elektrische Durchführung ist vorzugsweise dafür angeordnet, die Elektrode von außerhalb der Außenwand durch die Öffnung hindurch elektrisch zu kontaktieren. Mit anderen Worten heißt das, dass genau eine elektrische Durchführung über die Elektrode mit allen zu kontaktierenden Leiterbahnen elektrisch verbunden ist. So kann der Verbindungsaufwand nach außerhalb der Außenwand reduziert sein, weil eine einzige Durchführung über die Elektrode mit mehreren Leiterbahnen elektrisch kontaktiert. Eine bevorzugte elektrische Durchführung ist ein Bolzen, insbesondere ein zylindrischer Bolzen. Die elektrische Durchführung hat vorzugsweise einen Durchmesser von 3 - 15 mm, besonders vorzugsweise 8 mm. Die elektrische Durchführung ist vorzugsweise dafür eingerichtet, einen Strom von zwischen 10 - 500 Ampere, vorzugsweise mehr als 200 Ampere und/oder gleich oder weniger als 350 Ampere zu leiten, ohne sich merklich zu erwärmen. Die elektrische Durchführung umfasst vorzugsweise einen Durchführungsleiter, eine Durchführungshülse und eine Durchführungsisolation, die die Durchführungshülse elektrisch von dem Durchführungsleiter isoliert. Die Durchführungsisolation umgibt den Durchführungsleiter radial und hat eine Dicke von vorzugsweise 0,5 - 1,5 mm. Der Durchmesser der elektrischen Durchführung entspricht vorzugsweise im Wesentlichen einem Durchmesser der Öffnung, sodass die elektrische Durchführung in die Öffnung passgenau eingesetzt ist.

In Ausführungsformen durchtreten genau zwei elektrische Durchführungen die Öffnung, wobei eine davon die elektrische Durchführung ist, die die Elektrode kontaktiert, und die andere eine weitere elektrische Durchführung ist, die eine weitere Elektrode kontaktiert. Die Elektrode kontaktiert vorzugsweise den Plus-Pol der Leiterbahn elektrisch. Die weitere Elektrode kontaktiert vorzugsweise den Minus-Pol der Leiterbahn elektrisch.

In manchen Ausführungsformen, die mehrere Elektroden, insbesondere die Elektrode und die weitere Elektrode, aufweisen, ist vorgesehen, dass zur Kontaktierung jeder Elektrode jeweils genau eine elektrische Durchführung die Außenwand durchtritt und elektrisch mit der jeweils zugeordneten Elektrode verbunden ist, um die jeweils zugeordnete Elektrode durch die Außenwand hindurch elektrisch zu kontaktieren. So reicht pro Elektrode genau eine elektrische Durchführung zur elektrischen Kontaktierung aus, sodass die Anzahl der elektrischen Durchführungen durch die Außenwand reduziert sein kann.

Vorzugsweise nimmt der Vorsprung einen Schichtstapel auf, insbesondere zwischen der Außenwand und dem Leiterbahnträger, besonders vorzugsweise in dem Hohlraum. In dem Schichtstapel ist vorzugsweise die Elektrode angeordnet. Bevorzugt ist, dass die elektrische Durchführung in eine Eindringtiefe in den Schichtstapel eindringt, um die Elektrode elektrisch zu kontaktieren.

Angrenzend an die Außenwand ist als Bestandteil des Schichtstapels vorzugsweise eine elektrisch isolierende Isolationsschicht angebracht, insbesondere in dem Hohlraum. Die Isolationsschicht kann durch eines aus der Gruppe bestehend aus CVD/PVD-Beschichtung, Aerosolabscheidung und Flammspritzen oder eine weitere geeignete Beschichtungsweise aufgebracht sein. Die Isolationsschicht weist eine Dicke auf, die an eine erwartete maximale zu kontaktierende Spannung angepasst ist, um einen geeigneten Isolationswiderstand zu bilden. Angrenzend an die Isolationsschicht ist vorzugsweise eine Metallisierungsschicht aufgebracht, insbesondere durch Aufdampfen einer Dünnschicht. Angrenzend an die Metallisierungsschicht ist vorzugsweise eine erste Lotschicht angebracht. Angrenzend an die erste Lotschicht ist vorzugsweise die Elektrode angebracht. Die Elektrode ist in Ausführungsformen durch Siebdruck oder ähnliches aufgetragen. Angrenzend an die Elektrode ist vorzugsweise eine zweite Lotschicht angebracht, insbesondere angrenzend an jeden Kontaktbereich. Die zweite Lotschicht grenzt vorzugsweise weiterhin an die elektrisch zu kontaktierende Leiterbahn an, die auf dem Leiterbahnträger angebracht sein kann. In einer besonders bevorzugten Ausführungsform ist der Schichtstapel also, in einer Abfolge ausgehend von der Außenwand hin zu dem Leiterbahnträger, aus der Isolationsschicht, der Metallisierungsschicht, der ersten Lotschicht, der Elektrode und der zweiten Lotschicht gebildet.

Bevorzugt ist, dass die Elektrode über die erste Lotschicht mit der Metallisierungsschicht und/oder über die zweite Lotschicht mit der Leiterbahn stoffschlüssig verbunden ist, vorzugsweise durch Hartlöten, insbesondere mittels eines Lötmittels, besonders vorzugsweise mittels eines Lots auf Nickel-, Eisen-, Silber- oder Platin-Basis oder ähnlichem.

Vorzugsweise weist der Schichtstapel eine Aussparung, die sich teilweise in den Schichtstapel erstreckt, für die elektrische Durchführung bis zur Eindringtiefe auf, sodass die elektrische Durchführung die erste Lotschicht elektrisch kontaktiert, um die mit der ersten Lotschicht elektrisch kontaktierte Elektrode elektrisch zu kontaktieren. In bevorzugten Ausführungsformen durchdringt die Aussparung also die Isolationsschicht und die Metallisierungsschicht. Die Isolationsschicht und die Metallisierungsschicht umgeben also vorzugsweise die elektrische Durchführung radial, während die elektrische Durchführung vorzugsweise axial mit einem Ende der elektrischen Durchführung an der ersten Lotschicht anstößt. An der elektrischen Durchführung kann an einem dem Ende gegenüberliegenden weiteren Ende, das aus der Außenwand hervorragt, eine Verbindung zu einer Stromquelle bereitgestellt sein, beispielsweise ein Kabel oder eine Klemme.

Bevorzugt ist, dass die Vorrichtung dafür eingerichtet ist, durch die Öffnung hindurch den ersten Pol der Leiterbahn in dem Innenraum elektrisch zu kontaktieren. Vorzugsweise weist die Vorrichtung in der Außenwand einen weiteren Vorsprung mit der weiteren Öffnung auf, um den zweiten Pol der Leiterbahn in dem Innenraum elektrisch zu kontaktieren. Die weitere Öffnung ist vorzugsweise in einem weiteren radial nach außen abstehenden Vorsprung angeordnet, der insbesondere einstückig mit der Außenwand gebildet ist. Der weitere Vorsprung kann als weitere Sicke ausgebildet sein und nach einer der Ausführungsformen der voranstehend beschriebenen Sicke ausgebildet sein. Der erste Pol ist vorzugsweise der erste Pol der Leiterbahn, die insbesondere auf der Glattlage, die ein bevorzugter Leiterbahnträger ist, angeordnet ist. Der zweite Pol ist vorzugsweise der zweite Pol der Leiterbahn, die insbesondere auf der Glattlage angeordnet ist. Der erste Pol ist vorzugsweise der Plus-Pol. Der zweite Pol ist vorzugsweise der Minus-Pol. Der zweite Pol kann alternativ auch über die Außenwand, auch Vorrichtungsmantel genannt, elektrisch kontaktiert werden. Dann ist vorzugsweise der Auslauf der Glattlage zur Kontaktierung des Minus-Pols mit Lot zum Hartlöten zu versehen, welches dafür geeignet ist, Leiterbahn und Außenwand stoffschlüssig miteinander zu verbinden. So kann ein fester Kontakt zwischen Außenwand und Minus-Pol der Leiterbahn sichergestellt sein. Manche Ausführungsformen sehen vor, dass die Elektrode den ersten Pol kontaktiert. Einige Ausführungsformen sehen vor, dass eine weitere Elektrode, die wie Ausführungsformen der Elektrode ausgebildet sein kann, den zweiten Pol kontaktiert.

Besonders bevorzugt ist, dass die Vorrichtung in dem Innenraum die Elektrode und die weitere Elektrode aufweist und dafür eingerichtet ist, durch die Außenwand hindurch die Elektrode elektrisch zu kontaktieren, um je einen ersten Pol von zwei oder mehr der Leiterbahnen elektrisch zu kontaktieren, und dafür eingerichtet ist, durch die Außenwand hindurch die weitere Elektrode elektrisch zu kontaktieren, um je einen zweiten Pol der zwei oder mehr der Leiterbahnen elektrisch zu kontaktieren. Vorzugsweise ist die Elektrode in dem Vorsprung aufgenommen und die weitere Elektrode ist in dem weiteren Vorsprung aufgenommen. In manchen Ausführungsformen sind die Elektrode und die weitere Elektrode in einem gemeinsamen Vorsprung aufgenommen und/oder durch dieselbe Öffnung in der Außenwand elektrisch kontaktiert. Vorzugsweise kontaktiert eine positive elektrische Durchführung die Elektrode elektrisch. Bevorzugt ist, dass eine negative elektrische Durchführung die weitere Elektrode elektrisch kontaktiert.

Bevorzugt ist, dass die Elektrode und die weitere Elektrode in dem Innenraum parallel zu einander angeordnet sind und sich mit im Wesentlichen gleichbleibendem Abstand zu der Außenwand erstrecken. So können der erste Pol und der zweite Pol jeweils sehr kompakt unmittelbar nebeneinander elektrisch kontaktiert werden.

Vorzugsweise ist mindestens eine der Leiterbahnen dafür eingerichtet, eine in dem Innenraum angeordnete Heizeinrichtung zu betreiben. Vorzugsweise ist die Heizeinrichtung die Leiterbahn, die insbesondere auf der Glattlage angeordnet ist. Bevorzugt ist, dass die Leiterbahn auf der Glattlage mit der elektrisch isolierenden Isolierbeschichtung beschichtet ist, wobei in der Isolierbeschichtung eine Aussparung vorgesehen sind, um die Kontaktfläche der Leiterbahn freizulegen, an der die elektrische Kontaktierung der Leiterbahn mittels der Elektrode stattfindet. Für jede Kontaktfläche der Leiterbahn, insbesondere für jeden Pol der Leiterbahn, ist vorzugsweise eine separate Aussparung vorgesehen. Die Aussparungen sind vorzugsweise benachbart zu Enden der Glattlage angeordnet, da in der Regel die Enden Ausläufe der Glattlagen darstellen, die im montierten Zustand an der Elektrode anliegen. Die Leiterbahn als Heizeinrichtung verläuft vorzugsweise mäanderförmig oder zickzackförmig über den Leiterbahnträger. Vorzugsweise ist zwischen den Enden der Isolierbeschichtung und den Enden des Leiterbahnträgers, insbesondere der Folie der Glattlage, ein Abstand vorgesehen, der zudem frei von der Leiterbahn ist und der ebenfalls der Isolierung dient. Der Bereich des Abstandes, insbesondere an einer Stirnseite der Folie, ist für gewöhnlich dazu angeordnet, um im montierten Zustand von innen an der Außenwand der Vorrichtung anzustoßen. So kann ein elektrischer Kurzschluss des Leiterbahnträgers mit der Elektrode oder auch mit einer Innenseite der Außenwand verhindert werden.

In bevorzugten Ausführungsformen ist die Vorrichtung ein Katalysator, insbesondere ein flächig beheizbarer Katalysator. In diesen Ausführungsformen muss oft eine Vielzahl von Heizeinrichtungen, die vorzugsweise als Leiterbahnen auf den Leiterbahnträgern, insbesondere den Glattlagen, ausgeführt sind, von außerhalb der Vorrichtung durch die Außenwand hindurch elektrisch kontaktiert werden. Entsprechend vorteilhaft kann sich die vorliegende Erfindung also auswirken, weil insbesondere die Abdichtung verbessert oder vereinfacht ist.

Bevorzugt ist, dass mehrere Leiterbahnträger, insbesondere mehrere Folien, insbesondere mehrere Glattlagen und/oder mehrere Welllagen, ein Lagenpaket in dem Innenraum bilden. Bevorzugt ist, dass die Leiterbahnträger in einer gewickelten Anordnung in dem Innenraum angeordnet sind. Bevorzugt ist, dass Glattlagen und Welllagen abwechselnd angeordnet sind und jeweils benachbarte Glattlagen und Welllagen sich berühren. Vorzugsweise ist das Lagenpaket in einer bekannten S-Formgewickelt und das Lagenpaket ist derart in dem Innenraum aufgenommen, dass die Erstreckungsrichtung einer Wickelachse des Lagenpakets einer Erstreckungsrichtung der axialen Ausdehnung der Außenwand entspricht. In Ausführungsformen kann das Lagenpaket gekippt sein, sodass es von der Stirnseite aus betrachtet ein Parallelogramm bildet. Das bedeutet, in einer nicht-aufgerollten und somit flachen Form der gestapelten Lagen des Lagenpakets sind die Lagen zueinander parallelverschoben, sodass die Oberfläche der Stirnseite, die durch die Kanten der mehreren Glattlagen und/oder Welllagen gebildet ist, die Form eines Parallelogramms annimmt. Dann kann in Abhängigkeit eines Kippwinkels eine Länge des Lagenauslaufs in der gewickelten Form verkürzt sein. Dies ermöglicht, die Kontaktflächen der Leiterbahnen und die zugehörigen Kontaktbereiche der Elektrode klein zu halten oder auch die Elektrode zu verkürzen, insbesondere, wenn die Elektrode als Stromschiene ausgebildet ist. Ein bevorzugter Kippwinkel ist größer als 15°, nochmals bevorzugt größer als 30°. Ein bevorzugter Kippwinkel ist kleiner als 90°, nochmals bevorzugt kleiner als 80°. Der Kippwinkel liegt besonders vorzugsweise zwischen 40° und 80°. Besonders bevorzugte Kippwinkel können 50° und 75° sein. Der Lagenauslauf hat vorzugsweise eine Länge von weniger als 180°, nochmals bevorzugt weniger als 160°, nochmals bevorzugt weniger als 120°, nochmals bevorzugt weniger als 100° und besonders bevorzugt weniger als 90°, bezogen auf einen radialen Umfang einer kreiszylindrischen Außenwand. Beispielhafte bevorzugte Lagenausläufe haben Längen von zwischen 150° und 140°, insbesondere etwa 141°, oder von 110° bis 100°, insbesondere etwa 106°, bezogen auf den radialen Umfang der kreiszylindrischen Außenwand.

Vorzugsweise sind eine oder mehrere von Isolationsschicht, Isolierbereich und Isolierbeschichtung aus einem elektrisch isolierenden Werkstoff gebildet, der hochtemperaturbeständig ist, vorzugsweise hochtemperaturbeständig bis zu einer Temperatur von 1000° C. Der Werkstoff hat vorzugsweise eine oxidische Zusammensetzung und ist besonders vorzugsweise ein Aluminiumoxid, ein Titanoxid, ein Zirkonoxid oder ähnliches. Ein besonders bevorzugter Werkstoff hat eine Porosität von bevorzugt < 1%, nochmals bevorzugt eine Porosität von <0,1%, besonders bevorzugt eine Porosität von 0%. Der Werkstoff ist vorzugsweise mit einer Dicke zwischen 100 nm bis 10 µm vorgesehen. Vorzugsweise liegt die Dicke von einem oder mehreren von Isolationsschicht, Isolierbereich und Isolierbeschichtung also zwischen 100 nm bis 10 µm. Es versteht sich, dass Isolationsschicht, Isolierbereich und Isolierbeschichtung verglichen miteinander nicht alle aus gleichen Werkstoffen mit jeweils gleichen Dicken und Porositäten gebildet sein müssen und auch innerhalb jeder von Isolationsschicht, Isolierbereich und Isolierbeschichtung verschiedene Werkstoffe miteinander kombiniert sein können, solange jeweils die gewünschte elektrisch isolierende Wirkung erreicht wird.

Die erfindungsgemäße Vorrichtung wird vorzugsweise durch die folgenden Schritte hergestellt: Zunächst wird vorzugsweise in der Außenwand die Öffnung über dem Lagenauslauf der Leiterbahnträger eingebracht, wobei bevorzugt ist, dass die Länge des Lagenauslaufs vorab bestimmt wird, um die Abmessung der Öffnung geeignet wählen zu können. Dann wird eine entsprechende Matrix, die mit Leiterbahnen versehen ist, eingedrückt. Daraufhin werden vorzugsweise die Elektroden mit den Isolierbereichen versehen und die Isolierbeschichtung auf den Lagen angebracht, sowie bevorzugt die Stirnseiten der Lagen isoliert, insbesondere mit Keramikisolierung. Vorzugsweise wird anschließend die Elektrode für die Kontaktierung des Plus-Pols elektrisch isoliert an der Außenwand angebracht, insbesondere über Stützstifte. Bevorzugt ist, dass dann der Minus-Pol entweder direkt über die Außenwand oder eine weitere Elektrode kontaktiert wird. Sowohl die Elektrode als auch die weitere Elektrode können mindestens abschnittsweise in einem Vorsprung, insbesondere eine Sicke, der Außenwand angeordnet sein. Dann wird die Vorrichtung vorzugsweise mit einer Dichtungswand, die die Außenwand umgibt, gasdicht abgedichtet, wobei die Dichtungswand vorzugsweise mit gasdicht abgedichteten Durchgängen für die elektrischen Durchführungen zu der Elektrode und der weiteren Elektrode versehen wird. Schließlich werden die elektrischen Durchführungen durch die Außenwand hindurch und vorzugsweise durch die Dichtungswand hindurch mit der Elektrode und der weiteren Elektrode, wenn sie vorhanden ist, verbunden.

Im Folgenden werden beispielhafte Ausführungsformen der Erfindung, auf die die Erfindung allerdings nicht beschränkt ist, anhand der beigefügten schematischen Figuren beschrieben, in denen:
- Fig. 1: eine schematische perspektivische Seitenansicht einer Vorrichtung zur Abgasbehandlung in einer ersten Ausführungsform zeigt;
- Fig. 2: beispielhaft eine Elektrode in einer Aufsicht gemäß einer zweiten Ausführungsform der Vorrichtung zeigt;
- Fig. 3: eine Leiterbahn auf einem Leiterbahnträger der Vorrichtung gemäß der ersten Ausführungsform aus Fig. 1 in einer Aufsicht zeigt;
- Fig. 4: eine Querschnittsansicht entlang einer axialen Blickrichtung der Vorrichtung gemäß der ersten Ausführungsform zeigt; und
- Fig. 5: eine Querschnittsansicht entlang der axialen Blickrichtung der Vorrichtung gemäß einer dritten Ausführungsform zeigt.

In der folgenden detaillierten Beschreibung von Ausführungsformen, die sich auf die beigefügten Figuren bezieht, und in den beigefügten Patentansprüchen sind Bezugszeichen eingeführt worden, um die Lesbarkeit zu verbessern. Die Bezugszeichen sollen keine einschränkende Wirkung haben. Weiterhin können alle Merkmale, die im allgemeinen Teil der Beschreibung und in der folgenden detaillierten Beschreibung genannt sind, auch zwischen den veranschaulichenden, beispielhaften Ausführungsformen untereinander, miteinander kombiniert werden, um neue Ausführungsbeispiele gemäß der Erfindung zu bilden, sofern die kombinierten Merkmale sich nicht gegenseitig technisch ausschließen oder ihre Kombination nicht explizit ausgeschlossen wird.

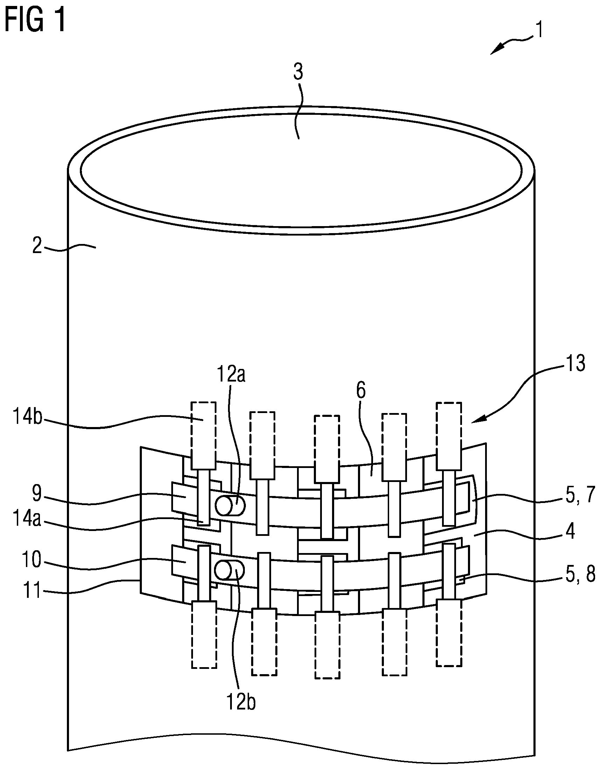

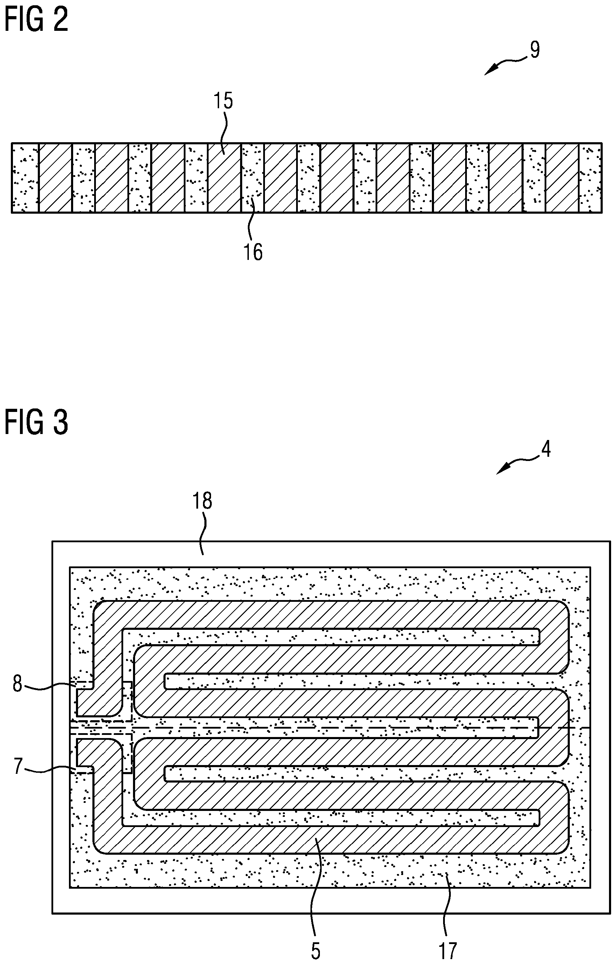

Fig. 1 zeigt eine schematische perspektivische Seitenansicht einer Vorrichtung 1 zur Abgasbehandlung in einer ersten Ausführungsform. Bei der Vorrichtung 1 handelt es sich allgemein um einen Katalysator. Die Vorrichtung weist eine Außenwand 2 auf. Die Außenwand 2 umgibt einen Innenraum 3. Die Vorrichtung weist in dem Innenraum 3 weiterhin drei Leiterbahnträger 4 auf, die jeweils eine Leiterbahn 5 tragen. Innerhalb des Innenraums 3 sind somit mehrere Leiterbahnen 5 angeordnet, hier beispielhaft drei. Die Leiterbahnträger 4 sind Folien und in diesem Fall Glattlagen der Vorrichtung 1. Zwischen zwei Leiterbahnträgern 4 ist jeweils eine Welllage 6 zwischengeordnet, die keine Leiterbahn 5 trägt. Leiterbahnträger 4 und Welllagen 6 bilden ein in S-Form gerolltes Lagenpaket. Leiterbahnträger 4 und Welllagen 6 der Vorrichtung sind weiter unten in Fig. 3-5 besser erkennbar. Die Leiterbahnträger 4 werden zudem anhand von Fig. 3 weiter unten genauer beschrieben. Jede der drei Leiterbahnen 5 weist jeweils eine erste Kontaktfläche 7 und eine zweite Kontaktfläche 8 auf. Um die Darstellung zu vereinfachen, ist jeweils nur eine der Leiterbahnträger 4, eine der Leiterbahnen 5, eine der Welllagen 6, eine der ersten Kontaktflächen 7 und eine der zweiten Kontaktflächen 8 mit Bezugszeichen versehen, die periodische Wiederholung dieser Elemente in Fig.1 ist jedoch offensichtlich.

Die Vorrichtung 1 ist dafür eingerichtet, die Leiterbahnen 5 durch die Außenwand 2 hindurch elektrisch zu kontaktieren. Dazu sind, wie in Fig. 1 gezeigt, in dem Innenraum 3 mehrere durch die Außenwand 2 hindurch elektrisch kontaktierbare Elektroden 9, 10 angeordnet, in diesem Beispiel eine Elektrode 9 und eine weitere Elektrode 10, von denen jede alle drei der Leiterbahnen 5 in dem Innenraum 3 elektrisch kontaktiert. Über jede der Elektroden 9, 10 wird also eine Mehrzahl der Leiterbahnen 5 elektrisch kontaktiert. Die Elektroden 9, 10 sind jeweils als Stromschiene ausgebildet, um die drei Leiterbahnen 5 zu kontaktieren. Die beiden Elektroden 9, 10 sind durch eine selbe Öffnung 11 in der Außenwand 2 hindurch elektrisch kontaktierbar. Die Öffnung 11 ist radial in der Außenwand 2 angeordnet. Die Öffnung 11 ist über einem Bereich des Innenraums 3 angeordnet, in dem die Leiterbahnen 5 kontaktierbar sind, nämlich über den ersten Kontaktflächen 7 und den zweiten Kontaktflächen 8 der Leiterbahnen 5. Die erste Kontaktfläche 7 ist bei jeder Leiterbahn 5 ein erster Pol, während die zweite Kontaktfläche 8 bei jeder Leiterbahn 5 ein zweiter Pol ist. Die Vorrichtung 1 ist somit dafür eingerichtet, durch die Außenwand 2 hindurch die Elektrode 9 elektrisch zu kontaktieren, um je einen ersten Pol der drei Leiterbahnen 5 elektrisch zu kontaktieren, und dafür eingerichtet, durch die Außenwand 2 hindurch die weitere Elektrode 10 elektrisch zu kontaktieren, um je einen zweiten Pol der drei Leiterbahnen 5 elektrisch zu kontaktieren.

Zur Kontaktierung jeder Elektrode 9, 10 durchtritt jeweils genau eine elektrische Durchführung 12a, b die Außenwand und ist mit der jeweils zugeordneten Elektrode 9, 10 verbunden, um die zugeordnete Elektrode 9, 10 durch die Außenwand hindurch elektrisch zu kontaktieren. Die zwei elektrischen Durchführungen 12a, b im ersten Ausführungsbeispiel gemäß Fig. 1 verlaufen beide durch dieselbe Öffnung 11, um die jeweils zugeordnete der beiden Elektroden 9, 10 elektrisch zu kontaktieren. Nicht gezeigt ist aus Gründen der Darstellung, dass die Außenwand 2 noch von einer Dichtungswand umgeben ist, die die Außenwand 2, die die Öffnung 11 zum Innenraum 3 aufweist, gegenüber der Umwelt abdichtet. In dieser geschlossenen Dichtungswand sind gasdicht abgedichtete Durchführungsbohrungen für die elektrischen Durchführungen 12a, b vorgesehen. So kann die Öffnung 11 eine Größe aufweisen, die insbesondere bei Herstellung oder Wartung einen besonders leichten Zugriff auf den Innenraum 3 erlaubt und trotzdem eine gute Dichtigkeit der Vorrichtung 1 erreicht werden.

Jede der Elektroden 9, 10 ist, wie in Fig. 1 gezeigt ist, über mehrere elektrisch isolierende Stützen 13 an der Außenwand 2 befestigt. Im vorliegenden Ausführungsbeispiel handelt es sich bei den Stützen 13 um je fünf Stützstifte. Die Stützstifte sind stoffschlüssig mit der Außenwand 2 und je einer der beiden Elektroden 9, 10 mechanisch verbunden. Die Stützen 13 sind dafür eingerichtet, die Außenwand 2 von der jeweiligen Elektrode 9, 10 elektrisch zu isolieren. Zu diesem Zweck weist jeder Stützstift zwei voneinander elektrisch isolierte Teilstifte 14a, b auf. Ein erster Teilstift 14a ist in einem zweiten Teilstift 14b koaxial fest aufgenommen. Zwischen dem ersten Teilstift 14a und dem zweiten Teilstift 14b ist ein Isolationsmaterial (nicht gezeigt) zur elektrischen Isolierung eingebracht, sodass der erste Teilstift 14a von dem zweiten Teilstift 14b elektrisch isoliert ist. Der erste Teilstift 14a ist aus einem Metall gefertigt und an einer Seite der Elektrode 9 angeschweißt, die dem Innenraum 3 abgewandt ist. Der zweite Teilstift 14b ist aus dem Metall gefertigt und an einer Innenseite der der Außenwand 2 angeschweißt. So ist trotz der mechanischen Verbindung über den Stützstift die Elektrode 9 von der Außenwand 2, an der die Elektrode 9 befestigt ist, elektrisch isoliert. Die Elektrode 9 und die weitere Elektrode 10 sind in dem Innenraum 2 parallel zueinander angeordnet.

Fig. 2 zeigt beispielhaft die Elektrode 9 in einer Aufsicht gemäß einer zweiten Ausführungsform der Vorrichtung 1. Die Aufsicht zeigt eine Seite der Elektrode 9, die dem Innenraum 3 zugewandt ist. Die Elektrode 9 ist als Stromschiene ausgebildet, in diesem Beispiel als streifenförmige Stromschiene. Auf der Elektrode 9 sind mehrere Kontaktbereiche 15 bereitgestellt. Auf der Elektrode 9 sind mehrere Isolierbereiche 16 bereitgestellt. Die Isolierbereiche 16 sind den Kontaktbereichen 15 zwischengeordnet, sodass sich entlang der Elektrode 9 je ein Kontaktbereich 15 mit einem Isolierbereich 16 abwechselt. Hier sind beispielhaft zehn Kontaktbereiche 15 bereitgestellt, sodass zehn Leiterbahnen 5, die innerhalb des Innenraums 3 angeordnet sind, durch die Elektrode 9 kontaktiert werden können. Sind mehr oder weniger Leiterbahnen 5 elektrisch zu kontaktieren, können aber auch entsprechend mehr oder weniger Kontaktbereiche 15 bereitgestellt sein. Bevorzugt ist, dass jeder Leiterbahn 5 genau ein Kontaktbereich 15 zugeordnet ist und die Anzahl der auf der Elektrode 9 bereitgestellten Kontaktbereiche 15 mit der Anzahl der elektrisch zu kontaktierenden Leiterbahnen 5 übereinstimmt. In der Elektrode 9 und der weiteren Elektrode 10 gemäß des ersten Ausführungsbeispiels aus Fig. 1 sind also jeweils drei Kontaktbereiche 15 bereitgestellt, um die drei Leiterbahnen 5 elektrisch zu kontaktieren. Aus Gründen der Vereinfachung sind in Fig. 2 nur ein Kontaktbereich 15 und nur ein dem Kontaktbereich 15 benachbarter Isolierbereich 16 mit Bezugszeichen versehen.

Fig. 3 zeigt die Leiterbahn 5 auf einem Leiterbahnträger 4 der Vorrichtung 1 gemäß der ersten Ausführungsform aus Fig. 1 in einer Aufsicht. Genauer zeigt Fig. 3 einen von mehreren Leiterbahnträgern 4, die in der Vorrichtung 1 installiert sind. Der Leiterbahnträger 4 bildet eine der Glattlagen des Katalysators. Auf dem Leiterbahnträger 4 ist auf einer Oberfläche die Leiterbahn 5 angeordnet. Die Leiterbahn 5 verläuft mäanderförmig über den Leiterbahnträger 4. Eine elektrisch isolierende Isolierbeschichtung 17 ist auf der Leiterbahn 5 und auf der Oberfläche aufgebracht. Die Isolierbeschichtung 17 erstreckt sich auch zwischen dem Leiterbahnträger 4 und der Leiterbahn 5, um die Leiterbahn 5 elektrisch gegen den Leiterbahnträger 4 zu isolieren. Die Isolierbeschichtung 17 bedeckt einen großen Teil des Leiterbahnträgers 4. Ein Abstand 18 ist zwischen Rand der Isolierbeschichtung 17 und Rand des Leiterbahnträgers 4 freigelassen. In dem Abstand 18 befindet sich weder die Isolierbeschichtung 17 noch die Leiterbahn 5. Somit kann der Abstand 18 als zusätzliche elektrische Isolierung dienen, beispielsweise falls der Abstand 18 im montierten Zustand des Leiterbahnträgers 4 in der Vorrichtung 1 beispielsweise an der Elektrode 9 oder von innen an der Außenwand 2 anstößt.

An einem ersten Endbereich der Leiterbahn 5, der den Plus-Pol der Leiterbahn 5 bildet, ist die erste Kontaktfläche 7 gebildet. Die elektrisch isolierende Isolierbeschichtung 17 ist über der ersten Kontaktfläche 7 der Leiterbahn 5 zum elektrischen Kontaktieren der Leiterbahn 5 unterbrochen, um die Leiterbahn 5 durch die Außenwand 2 hindurch elektrisch zu kontaktieren. Die erste Kontaktfläche 7 ist also dadurch gebildet, dass eine erste Ausnehmung in der Isolierbeschichtung 17 gebildet ist, die die erste Kontaktfläche 7 der Leiterbahn 4 freilegt. An einem zweiten Endbereich der Leiterbahn 5, der einen Minus-Pol der Leiterbahn 5 bildet, ist die zweite Kontaktfläche 8 gebildet. Die elektrisch isolierende Isolierbeschichtung 17 ist über der zweiten Kontaktfläche 8 der Leiterbahn 5 zum elektrischen Kontaktieren der Leiterbahn 5 unterbrochen, um die Leiterbahn 5 durch die Außenwand 2 hindurch elektrisch zu kontaktieren. Die zweite Kontaktfläche 8 ist also dadurch gebildet, dass eine zweite Ausnehmung in der Isolierbeschichtung 17 gebildet ist, die den zweiten Endbereich freilegt. So ist sichergestellt, dass eine elektrische Kontaktierung der Leiterbahn 5 nur in den beiden Endbereichen der Leiterbahn 5 stattfinden kann. Einer der Kontaktbereiche 15 der Elektrode 9 ist somit dafür angeordnet, mit der ersten Kontaktfläche 7 elektrisch in Kontakt zu stehen, um die Leiterbahn 5 durch die Öffnung 11 in der Außenwand 2 über die der Elektrode 9 zugeordnete elektrische Durchführung 12a elektrisch zu verbinden. Einer der Kontaktbereiche der weiteren Elektrode 10 ist zudem dafür angeordnet, mit der zweiten Kontaktfläche 8 elektrisch in Kontakt zu stehen, um die Leiterbahn 5 durch die Öffnung 11 in der Außenwand 2 über die der weiteren Elektrode 10 zugeordnete elektrische Durchführung 12b elektrisch zu verbinden. Die Vorrichtung 1 ist also dafür eingerichtet, durch die Öffnung 11 hindurch den ersten Pol jeder Leiterbahn 5 und den zweiten Pol jeder Leiterbahn 5 in dem Innenraum 3 elektrisch zu kontaktieren. Die eine elektrische Durchführung 12a ist eine positive elektrische Durchführung und die andere elektrische Durchführung 12b ist eine negative elektrische Durchführung.

Die in Fig. 3 gezeigte Leiterbahn 5 ist dafür eingerichtet, eine in dem Innenraum 2 angeordnete Heizeinrichtung zu betreiben. Genauer gesagt ist die Leiterbahn 5 hier die Heizeinrichtung und hat einen elektrischen Widerstand, der den Leiterbahnträger 4 bei Stromfluss durch die Leiterbahn 5, zwischen dem ersten Pol und dem zweiten Pol, erhitzt. Es wird also die Glattlage flächig beheizt. Deshalb ist die Vorrichtung 1 ein flächig beheizbarer Katalysator.

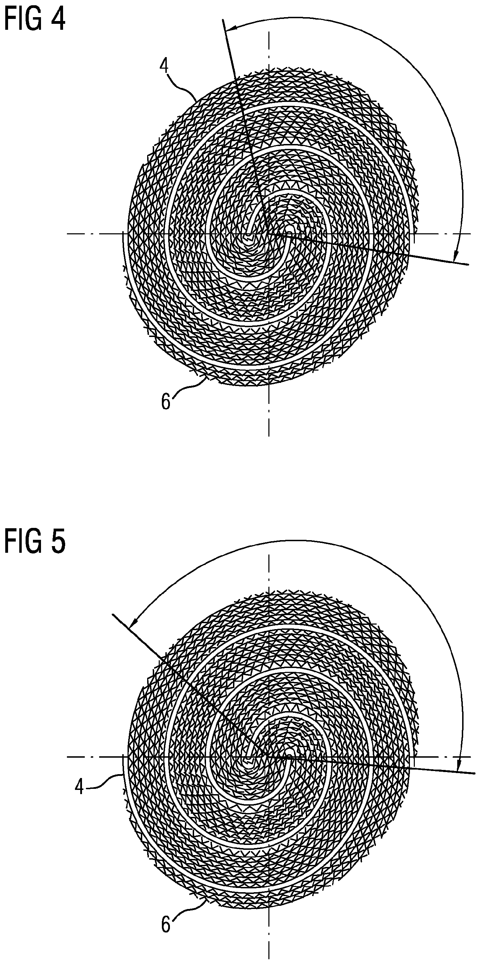

Fig. 4 zeigt eine Querschnittsansicht entlang der axialen Blickrichtung der Vorrichtung 1 gemäß der ersten Ausführungsform. Genauer zeigt Fig. 4 nun das Lagenpaket aus Leiterbahnträgern 4 und Welllagen 6 veranschaulichend entlang einer Wickelachse des Lagenpakets. Für die in den Fig. 1 veranschaulichte Vorrichtung 1 kommt eine Wicklung in S-Form gemäß Fig. 4 zum Einsatz. Die Erstreckungsrichtung der Wickelachse des Lagenpakets entspricht einer Erstreckungsrichtung der axialen Ausdehnung der Außenwand 2. Das Lagenpaket ist gekippt, sodass es, im nicht gewickelten, flachen Zustand, von der Stirnseite aus betrachtet ein Parallelogramm bildet. Die Lagen sind also zueinander verschoben angeordnet. Ein Grad der Verschiebung bestimmt eine Länge eines Lagenauslaufs. Hier beträgt beispielhaft der Kippwinkel, der am nicht gewickelten Lagenpaket messbar ist, 75° und die Länge des Lagenauslaufs beträgt 120,6 mm oder, als radialer Umfangswinkel der Außenwand 2 ausgedrückt, 106,3°. So können die jeweiligen ersten Kontaktflächen 17 der Leiterbahnen 9 und die zugehörigen Kontaktbereiche 18 der Elektrode 11 kleingehalten werden oder auch die Länge der Elektrode 11 kurzgehalten werden.

Fig. 5 zeigt eine Querschnittsansicht entlang der axialen Blickrichtung der Vorrichtung 1 gemäß einer dritten Ausführungsform. Gezeigt ist ein Lagenpaket aus Leiterbahnträgern 4 und Welllagen 6, das einen alternativen Kippwinkel aufweist, veranschaulichend entlang einer Wickelachse des Lagenpakets . Für einige nicht gezeigte Ausführungsformen der Erfindung kommt die Wicklung in S-Form gemäß Fig. 5 zum Einsatz. Sie ersetzt dann einfach die Wicklung gemäß Fig. 4, unter Anpassung der Elektrode 9 und der weiteren Elektrode 10 und weiterer, von der Länge des Lagenauslaufs abhängiger Elemente. Die Erstreckungsrichtung der Wickelachse des gezeigten Lagenpakets entspricht wieder der Erstreckungsrichtung der axialen Ausdehnung der Außenwand 2. Das Lagenpaket ist wieder gekippt, sodass es, im nicht gewickelten, flachen Zustand, von der Stirnseite aus betrachtet das Parallelogramm bildet. Die Lagen sind also erneut zueinander verschoben angeordnet. Hier beträgt beispielhaft der Kippwinkel, der am nicht gewickelten Lagenpaket messbar ist, allerdings 50° und die Länge des Lagenauslaufs beträgt 160,7 mm oder, als radialer Umfangswinkel der Außenwand 2 ausgedrückt, 141,6°. So kann der Lagenauslauf über eine größere Strecke gestreckt werden, was je nach Anwendung vorteilhaft sein kann. Weitere Kippwinkel sind möglich und je nach Anwendungsfall vorteilhaft.

Die Erfindung erlaubt also, flächige Heizelemente, wie zum Beispiel Heizfolien, die in einen Katalysator eingebracht wurden, vereinfacht zu kontaktieren. Insbesondere können herkömmlich elektrisch beheizbare Katalysatoren, die metallische Blechlagen umfassen, die elektrisch isoliert an einem Stützsubstrat angeordnet sind, in nicht gezeigten Ausführungsformen in vergleichbarer Weise wie die gezeigten Leiterbahnen 5 kontaktiert werden. Somit kann sowohl die Plus-, als auch die Minus-Kontaktierung an der gleichen radialen Position abgegriffen werden. Die Kontaktierung aller Kontaktflächen 7, 8 der Leiterbahnen 5 kann also zentral mittels Elektrode 9, für die Plus-Pole, bzw. der weiteren Elektrode 10 für die Minus-Pole der Leiterbahnen 5 erfolgen. Daraus folgt ein einfacher, zentraler elektrischer Anschluss der Leiterbahnen 4 mittels der elektrischen Durchführung 12a,b, insbesondere eines mittels Leiterbahnen 5 flächig beheizbaren Katalysators. Es ergibt sich eine gesteigerte Zugänglichkeit und ein geringerer benötigter Bauraum.

## Patentansprüche

1. Vorrichtung (1) zur elektrischen Kontaktierung eines elektrisch beheizbaren Katalysators in einer Abgasanlage für Kraftfahrzeuge mit Verbrennungsmotoren zur Abgasbehandlung, die dafür eingerichtet ist, mehrere Leiterbahnen (5), die innerhalb eines von einer Außenwand (2) der Vorrichtung (1) umgebenen Innenraums (3) angeordnet sind, durch die Außenwand (2) hindurch elektrisch zu kontaktieren, wobei in dem Innenraum (3) eine oder mehrere durch die Außenwand (2) hindurch elektrisch kontaktierbare Elektroden (9, 10) angeordnet sind, von denen jede zwei oder mehr der Leiterbahnen (5) in dem Innenraum (3) elektrisch kontaktiert, wobei die Vorrichtung (1) in dem Innenraum (3) einen oder mehrere Leiterbahnträger (4) aufweist, die jeweils eine der Leiterbahnen (5) tragen, **dadurch gekennzeichnet, dass** jeweils eine der Leiterbahnen (5) auf einer Oberfläche eines jeweiligen Leiterbahnträgers (4) angeordnet ist und auf der Oberfläche und der Leiterbahn (5) eine elektrisch isolierende Isolierbeschichtung (20) gebildet ist, die über einer Kontaktfläche (7, 8) der Leiterbahn (5) zum elektrischen Kontaktieren der Leiterbahn (5) unterbrochen ist, um die Leiterbahn (5) durch die Außenwand (2) hindurch elektrisch zu kontaktieren.

2. Vorrichtung (1) nach Anspruch 1, **dadurch gekennzeichnet, dass** mindestens eine der Elektroden (9, 10) als Stromschiene ausgebildet ist, um mehrere der Leiterbahnen (5) zu kontaktieren.

3. Vorrichtung (1) nach Anspruch 1 oder 2, wobei mindestens eine der Elektroden (9, 10) über eine oder mehrere elektrisch isolierende Stützen (13) an der Außenwand (2) befestigt ist.

4. Vorrichtung (1) nach einem der vorstehenden Ansprüche, **dadurch gekennzeichnet, dass** zwei oder mehr der Elektroden (9, 10) durch eine selbe Öffnung (11) in der Außenwand (2) hindurch elektrisch kontaktierbar sind, wobei die Öffnung (11) radial in der Außenwand (2) über einem Bereich des Innenraums (3) angeordnet ist, in dem die Leiterbahnen (5) kontaktierbar sind.

5. Vorrichtung (1) nach einem der vorstehenden Ansprüche, **dadurch gekennzeichnet, dass** zur Kontaktierung jeder Elektrode (9, 10) jeweils genau eine elektrische Durchführung (12a, b) die Außenwand (2) durchtritt und elektrisch mit der jeweils zugeordneten Elektrode (9, 10) verbunden ist, um die jeweils zugeordnete Elektrode (9, 10) durch die Außenwand (2) hindurch elektrisch zu kontaktieren.

6. Vorrichtung (1) nach einem der vorstehenden Ansprüche, **dadurch gekennzeichnet, dass** die Vorrichtung (1) in dem Innenraum (3) eine Elektrode (9) und eine weitere Elektrode (10) aufweist und dafür eingerichtet ist, durch die Außenwand (2) hindurch die Elektrode (9) elektrisch zu kontaktieren, um je einen ersten Pol von zwei oder mehr der Leiterbahnen (5) elektrisch zu kontaktieren, und dafür eingerichtet ist, durch die Außenwand (2) hindurch die weitere Elektrode (10) elektrisch zu kontaktieren, um je einen zweiten Pol der zwei oder mehr der Leiterbahnen (5) elektrisch zu kontaktieren.

7. Vorrichtung (1) nach Anspruch 6, wobei die Elektrode (9) und die weitere Elektrode (10) in dem Innenraum (3) parallel zu einander angeordnet sind.

8. Vorrichtung (1) nach einem der vorstehenden Ansprüche, **dadurch gekennzeichnet, dass** mindestens eine der Leiterbahnen (5) dafür eingerichtet ist, eine in dem Innenraum (3) angeordnete Heizeinrichtung zu betreiben.

## Claims

1. Device (1) for electrically contacting an electrically heatable catalytic converter in an exhaust system for motor vehicles with internal combustion engines for treating exhaust gases, which device is designed for electrically contacting a plurality of conductor tracks (5), which are arranged within an interior space (3) that is surrounded by an outer wall (2) of the device (1), through the outer wall (2), wherein one or more electrodes (9, 10) which can be electrically contacted through the outer wall (2) are arranged in the interior space (3), each of which electrodes electrically contacts two or more of the conductor tracks (5) in the interior space (3), wherein the device (1) has, in the interior space (3), one or more conductor track carriers (4) which each carry one of the conductor tracks (5), **characterized in that** in each case one of the conductor tracks (5) is arranged on a surface of a respective conductor track carrier (4) and an electrically insulating insulation coating (20), which is interrupted above a contact area (7, 8) of the conductor track (5) for electrically contacting the conductor track (5) in order to electrically contact the conductor track (5) through the outer wall (2), is formed on the surface and the conductor track (5).

2. Device (1) according to Claim 1, **characterized in that** at least one of the electrodes (9, 10) is designed as a busbar in order to contact a plurality of the conductor tracks (5).

3. Device (1) according to Claim 1 or 2, wherein at least one of the electrodes (9, 10) is fastened to the outer wall (2) by means of one or more electrically insulating supports (13).

4. Device (1) according to one of the preceding claims, **characterized in that** two or more of the electrodes (9, 10) can be electrically contacted through the same opening (11) in the outer wall (2), wherein the opening (11) is arranged radially in the outer wall (2) above a region of the interior space (3) in which the conductor tracks (5) can be contacted.

5. Device (1) according to one of the preceding claims, **characterized in that**, for contacting each electrode (9, 10), in each case precisely one electrical bushing (12a, b) passes through the outer wall (2) and is electrically connected to the respectively associated electrode (9,10) in order to electrically contact the respectively associated electrode (9, 10) through the outer wall (2).

6. Device (1) according to one of the preceding claims, **characterized in that** the device (1) has an electrode (9) and a further electrode (10) in the interior space (3) and is designed for electrically contacting the electrode (9) through the outer wall (2) in order to electrically contact in each case a first pole of two or more of the conductor tracks (5) and is designed for electrically contacting the further electrode (10) through the outer wall (2) in order to electrically contact in each case a second pole of the two or more of the conductor tracks (5).

7. Device (1) according to Claim 6, wherein the electrode (9) and the further electrode (10) are arranged parallel to one another in the interior space (3).

8. Device (1) according to one of the preceding claims, **characterized in that** at least one of the conductor tracks (5) is designed for operating a heater which is arranged in the interior space (3).

## Revendications

1. Dispositif (1) d'établissement d'un contact électrique avec un catalyseur pouvant être chauffé électriquement dans un système de gaz d'échappement pour des véhicules automobiles équipés de moteurs à combustion interne pour le traitement des gaz d'échappement, qui est conçu pour établir un contact électrique avec plusieurs pistes conductrices (5), qui sont disposées à l'intérieur d'un espace intérieur (3) entouré par une paroi extérieure (2) du dispositif (1), à travers la paroi extérieure (2), dans lequel une ou plusieurs électrodes (9, 10) avec lesquelles un contact électrique peut être établi à travers la paroi extérieure (2) sont disposées dans l'espace intérieur (3), chacune d'entre elles établissant un contact électrique avec deux pistes conductrices (5) ou plus dans ledit espace intérieur (3), dans lequel le dispositif (1) présente dans l'espace intérieur (3) un ou plusieurs supports de pistes conductrices (4) qui portent chacun l'une des pistes conductrices (5), **caractérisé en ce que** l'une des pistes conductrices (5) est respectivement disposée sur une surface d'un support de piste conductrice (4) respectif et **en ce qu'**un revêtement d'isolation électriquement isolant (20), qui est interrompu au-dessus d'une surface de contact (7, 8) de la piste conductrice (5) pour établir un contact électrique avec la piste conductrice (5), est formé sur la surface et la piste conductrice (5) afin d'établir un contact électrique avec la piste conductrice (5) à travers la paroi extérieure (2).

2. Dispositif (1) selon la revendication 1, **caractérisé en ce qu'**au moins l'une des électrodes (9, 10) est réalisée sous la forme d'un rail de courant pour établir un contact électrique avec plusieurs des pistes conductrices (5).

3. Dispositif (1) selon la revendication 1 ou 2, dans lequel au moins l'une des électrodes (9, 10) est fixée à la paroi extérieure (2) par l'intermédiaire d'un ou de plusieurs supports électriquement isolants (13).

4. Dispositif (1) selon l'une des revendications précédentes, **caractérisé en ce qu'**un contact électrique peut être établi avec deux des électrodes (9, 10) ou plus à travers une même ouverture (11) dans la paroi extérieure (2), dans lequel l'ouverture (11) est disposée radialement dans la paroi extérieure (2) au-dessus d'une zone de l'espace intérieur (3) dans laquelle un contact peut être établi avec les pistes conductrices (5).

5. Dispositif (1) selon l'une des revendications précédentes, **caractérisé en ce que**, pour l'établissement d'un contact avec chaque électrode (9, 10), exactement une traversée électrique (12a, b) traverse la paroi extérieure (2) et est reliée électriquement à l'électrode (9, 10) respectivement associée, afin d'établir un contact électrique avec l'électrode (9, 10) respectivement associée à travers la paroi extérieure (2).

6. Dispositif (1) selon l'une des revendications précédentes, **caractérisé en ce que** le dispositif (1) présente dans l'espace intérieur (3) une électrode (9) et une autre électrode (10) et est conçu pour établir un contact électrique avec l'électrode (9) à travers la paroi extérieure (2), afin d'établir un contact électrique avec un premier pôle de chacune de deux des pistes conductrices (5) ou plus, et est conçu pour établir un contact électrique avec l'autre électrode (10) à travers la paroi extérieure (2), afin d'établir un contact électrique avec un deuxième pôle de chacune des deux pistes conductrices (5) ou plus.

7. Dispositif (1) selon la revendication 6, dans lequel l'électrode (9) et l'autre électrode (10) sont disposées parallèlement l'une à l'autre dans l'espace intérieur (3).

8. Dispositif (1) selon l'une des revendications précédentes, **caractérisé en ce qu'**au moins l'une des pistes conductrices (5) est conçue pour faire fonctionner un dispositif de chauffage disposé dans l'espace intérieur (3).
